(19) Europäisches Patentamt / European Patent Office / Office européen des brevets

(11) **EP 2 232 765 B1**

(12) **FASCICULE DE BREVET EUROPEEN**

(45) Date de publication et mention de la délivrance du brevet:
**04.03.2020 Bulletin 2020/10**

(21) Numéro de dépôt: **09705307.8**

(22) Date de dépôt: **09.01.2009**

(51) Int Cl.:
*H04L 9/08* (2006.01)    *H04L 9/30* (2006.01)

(86) Numéro de dépôt international:
**PCT/FR2009/050028**

(87) Numéro de publication internationale:
**WO 2009/095574 (06.08.2009 Gazette 2009/32)**

(54) **PROCEDE ET ENTITE DE CHIFFREMENT SYMETRIQUE PROBABILISTE**

VERFAHREN UND EINHEIT ZUR PROBABILISTISCHEN SYMMETRISCHEN DATENVERSCHLÜSSELUNG

METHOD AND ENTITY FOR PROBABILISTIC SYMMETRICAL ENCRYPTION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **11.01.2008 FR 0850168**

(43) Date de publication de la demande:
**29.09.2010 Bulletin 2010/39**

(73) Titulaire: **Orange**
**75015 Paris (FR)**

(72) Inventeurs:
• **SEURIN, Yannick**
**91160 Saulx les Chartreux (FR)**
• **GILBERT, Henri**
**F-91440 Bures sur Yvette (FR)**

(56) Documents cités:
**US-A1- 2003 223 579**

• **JEAN-PHILIPPE AUMASSON ET AL: "TCHo : A Hardware-Oriented Trapdoor Cipher" INFORMATION SECURITY AND PRIVACY; [LECTURE NOTES IN COMPUTER SCIENCE;;LNCS], SPRINGER BERLIN HEIDELBERG, BERLIN, HEIDELBERG, vol. 4586, 2 juillet 2007 (2007-07-02), pages 184-199, XP019065040 ISBN: 978-3-540-73457-4**

• **RAO T R N ET AL: "PRIVATE-KEY ALGEBRAIC-CODE ENCRYPTIONS" IEEE TRANSACTIONS ON INFORMATION THEORY, IEEE, US, vol. 35, no. 4, 1 juillet 1989 (1989-07-01), pages 829-833, XP000100912 ISSN: 0018-9448**

• **BLUM A ET AL: "Cryptographic primitives based on hard learning problems" ADVANCES IN CRYPTOLOGY - CRYPTO '93. 13TH ANNUAL INTERNATIONAL CRYPTOLOGY CONFERENCE PROCEEDINGS SPRINGER-VERLAG BERLIN, GERMANY, 1994, pages 278-291, XP008096803 ISBN: 3-540-57766-1**

• **ARI JUELS ET AL: "Authenticating Pervasive Devices with Human Protocols", 14 August 2005 (2005-08-14), ADVANCES IN CRYPTOLOGY - CRYPTO 2005 LECTURE NOTES IN COMPUTER SCIENCE;;LNCS, SPRINGER, BERLIN, DE, PAGE(S) 293 - 308, XP047030109, ISBN: 978-3-540-28114-6**

• **R. Elwyn Berlekamo ET AL: "On the Inherent Intractability of Certain Codiig Problems", Information Sciences, 3 May 1978 (1978-05-03), pages 384-385, XP055558121, DOI: 10.1016/j.ins.2016.01.015 Retrieved from the Internet: URL:https://ieeexplore.ieee.org/ielx5/18/22702/01055873.pdf?tp=&arnumber=1055873&isn umber=22702 [retrieved on 2019-02-18]**

• **Eric Levieil ET AL: "An improved LPN algorith", LNCS, 1 January 2006 (2006-01-01), XP055558159, Retrieved from the Internet: URL:https://www.di.ens.fr/~fouque/pub/scn06.pdf [retrieved on 2019-02-18]**

**Description**

La présente invention concerne un procédé de chiffrement probabiliste d'un message à l'aide d'une clé secrète et un procédé de déchiffrement associé.

L'invention trouve des applications dans le domaine de la cryptographie à bas coût, notamment dans les étiquettes RFID, nécessitant néanmoins une sécurité élevée.

En cryptographie symétrique, l'émetteur et le destinataire d'un message partagent la connaissance d'une même clé secrète K. Celle-ci permet à l'émetteur de transformer le message en clair en un cryptogramme, ou message chiffré, et au destinataire de recouvrer le message en clair à partir du message chiffré.

L'invention s'intéresse plus particulièrement aux méthodes de chiffrement symétrique probabilistes. Une méthode de chiffrement est dite "probabiliste" lorsqu'elle fait intervenir un aléa dans le chiffrement. Il en résulte que, si on chiffre deux fois le même message clair, on obtient deux messages chiffrés différents avec une forte probabilité. En effet, le message chiffré dépend non seulement du message en clair mais également de l'aléa. Les méthodes de chiffrement probabilistes s'opposent aux méthodes de chiffrement déterministes qui fournissent toujours le même chiffré pour un message clair et une clé donnés.

Un exemple typique de méthode de chiffrement symétrique probabiliste est une méthode de chiffrement utilisant un algorithme de chiffrement par blocs, tel que AES (Advanced Encryption Standard, standard de chiffrement avancé) ou DES (Data Encryption Standard, standard de chiffrement de données), combiné à un mode opératoire CBC (Cipher Block Chaining, enchaînement des blocs). Par définition, un "mode opératoire", ou "mode d'opération", est la manière de traiter les blocs de texte clairs et chiffrés au sein d'un algorithme de chiffrement par blocs. Dans le mode CBC, le texte clair est découpé en blocs $M_1|M_2| ...M_n$ et le chiffré $C_0|C_1|C_2|...|C_n$ est défini par $C_i = E_k (M_i + C_{i-1})$ avec $C_0 = IV$, où $IV$ (Initialization Vector, vecteur d'initialisation) est un bloc aléatoire conférant au chiffrement son caractère probabiliste. Plusieurs autres modes opératoires, adéquats pour un chiffrement symétrique probabiliste, existent : CFB (Cipher Feedback, chiffrement à rétroaction), OFB (Output Feedback, chiffrement à rétroaction), CTR (Counter), ...

Ainsi la plupart des méthodes de chiffrement symétrique utilisent un algorithme de chiffrement par blocs avec un certain mode opératoire. La sécurité de telles méthodes de chiffrement s'analyse en deux temps :

-  dans un premier temps, la sécurité de l'algorithme de chiffrement par blocs est analysée en étudiant son comportement en tant que permutation pseudo-aléatoire, le but étant de vérifier qu'une permutation générée par le chiffrement par blocs et associée à une clé aléatoire n'est pas distinguable d'une permutation parfaitement aléatoire,
-  dans un second temps, la sécurité du mode opératoire est analysée en supposant que le chiffrement par blocs est une permutation pseudo-aléatoire parfaitement sure.

En général, la sécurité du mode opératoire peut être prouvée de façon rigoureuse. A titre d'exemples, les modes opératoires CTR et CBC sont prouvés sûrs dans le sens où il est possible de démontrer qu'ils sont incassables lorsque le chiffrement par blocs utilisé est lui-même incassable.

En revanche, il est plus délicat de prouver la sécurité de l'algorithme de chiffrement par blocs.

D'une manière générale, il existe deux notions caractérisant la sécurité d'un système cryptographique, bien connues de l'homme du métier :

-  la sécurité inconditionnelle et

-  la sécurité calculatoire.

Par définition, un algorithme est inconditionnellement sûr si un attaquant ne peut récupérer aucune information sur le texte clair à partir du texte chiffré, quelle que soit sa puissance de calcul.

Dans le domaine symétrique, seule la sécurité inconditionnelle peut être prouvée. Il en résulte que la sécurité des algorithmes de chiffrement connus repose actuellement sur des bases empiriques. Pour aucun algorithme de chiffrement par blocs connu, on ne dispose d'arguments mathématiques pour déterminer une borne inférieure relative à la complexité d'attaques. Les arguments actuels de sécurité des algorithmes de chiffrement par blocs sont essentiellement les suivants :

-  absence d'attaques connues de complexité inférieure au niveau de sécurité souhaité;
-  résistance prouvable à des méthodes particulières d'attaque, par exemple résistance à la cryptanalyse différentielle et à la cryptanalyse linéaire;
-  dans le cas de certains algorithmes tels que DES, existence de preuves de résistance aux attaques dans le modèle de sécurité dit de Luby et Rackoff dans lequel on remplace certaines composantes de l'algorithme réel par des fonctions idéales parfaitement aléatoires.

Actuellement, aucune des méthodes connues de chiffrement symétrique probabiliste utilisant un algorithme de chiffrement par blocs et un mode opératoire ne concilie les deux exigences suivantes :

- l'existence d'arguments mathématiques pour étayer la sécurité calculatoire du chiffrement et ainsi prouver qu'un attaquant pouvant acquérir un nombre polynomial de paires clair/chiffré ne peut déduire d'un chiffré supplémentaire aucune information sur le texte clair correspondant ;
- l'existence de moyens logiciels pour mettre en œuvre la méthode chiffrement dont la rapidité soit proche de celle des algorithmes par blocs actuellement utilisés, tels que AES et DES, et nécessitant des ressources de calcul réalistes. Il est connu de l'état de l'art les documents

XP019065040 TCHo : A Hardware-Oriented Trapdoor Cipher de Jean-Philippe Aumasson; Matthieu Finiasz; Willi Meier; Serge Vaudenay. Ce document décrit une amélioration du système de Finiasz-Vaudenay.

Le document XP000100912 PRIVATE-KEY ALGEBRAIC-CODE ENCRYPTIONS de RAO T R N; KIL-HYUN NAM

Le document XP055558121 On the Inherent Intractability of Certain Codiig Problems de Elwyn Berlekamo R; Robert J Mceliece; Henk C A Van Tilborg

US2003223579 Secure and linear public-key cryptosystem based on parity-check error-correcting

Le document XP019194063

Cryptographie Primitives Based on Hard Learning Problems Avrim Blum; Merrick Furst; Michael Kearns; Richard J Lipton

Il existe donc un besoin d'une méthode de chiffrement symétrique probabiliste pour laquelle il soit possible de prouver la sécurité par une approche réductionniste consistant à traduire la sécurité en une hypothèse sur la difficulté de résoudre un problème connu. Si cette hypothèse est satisfaite, alors la méthode est sure. En d'autres termes, il existe un besoin d'une méthode de chiffrement symétrique probabiliste pour laquelle il soit possible de prouver que, pour casser la sécurité de cette méthode de chiffrement, un attaquant doit être capable de résoudre un problème connu, présumé difficile.

A cet effet, l'invention concerne un procédé de chiffrement symétrique probabiliste d'un élément de message en clair à l'aide d'une clé secrète pouvant être représentée sous la forme d'une matrice de dimension (k, n) avec k>1 et n>1, comprenant les étapes suivantes :

- une étape d'encodage de l'élément de message en clair en un mot de code à l'aide d'un code correcteur d'erreurs ayant une capacité de correction donnée;
- une étape de chiffrement du mot de code, lors de laquelle le résultat d'un produit de la matrice secrète et d'un vecteur aléatoire de dimension k est ajouté au mot de code,
- une étape de calcul lors de laquelle un vecteur de bruit est ajouté au mot de code chiffré afin d'obtenir un élément de message chiffré couplé au vecteur aléatoire,

le code correcteur d'erreurs et le vecteur de bruit étant adaptés pour que le poids de Hamming du vecteur de bruit soit inférieur ou égal à la capacité de correction du code correcteur.

D'emblée, on notera que, par définition, un "élément de message" comprend tout ou partie d'un message. Le couple composé du vecteur aléatoire et de l'élément de message chiffré est ensuite fourni à une entité de déchiffrement. Si celle-ci connaît la clé secrète représentée par la matrice, il déduit du vecteur aléatoire et de l'élément de message chiffré le mot de code bruité par le vecteur de bruit. Il lui suffit alors de procéder à un décodage à l'aide du code correcteur d'erreurs. Le poids de Hamming du vecteur de bruit étant inférieur à la capacité de correction du code correcteur, le décodage fournit directement l'élément de message en clair.

L'invention repose sur la combinaison d'un encodage par code correcteur d'erreurs et de l'ajout d'un bruit. Cette combinaison a pour effet de rendre plus difficile le déchiffrement du chiffré par un adversaire tout en étant adapté pour être naturellement supprimé par le décodage du code correcteur d'erreurs.

La sécurité du procédé de chiffrement de l'invention repose sur l'hypothèse de la difficulté de résolution d'un problème bien défini et bien connu, à savoir le problème LPN (Learning Parity with Noise).

Posons "$a_i$" un vecteur ligne aléatoire à k bits, "M" une matrice binaire à k lignes et n colonnes, et "$\varepsilon_i$" un vecteur de bruit ligne à n bits dont les bits valent 1 avec une probabilité $\eta$ avec $\eta \in \left]0, \frac{1}{2}\right[$. Le problème LPN "matriciel" peut être formulé comme suit : des paires ($a_i$, $y_i = a_i \cdot M + \varepsilon_i$) pour une pluralité d'indices i étant fournis à un adversaire, celui-ci doit deviner la valeur de $a_i \cdot M$ à partir d'un nouveau vecteur aléatoire "$a_i$" fourni. Il a été prouvé que le fait d'ajouter un vecteur de bruit $\varepsilon_i$ aux vecteurs $a_i \cdot M$ rend la résolution de ce problème extrêmement difficile, même à partir d'un grand nombre de paires ($a_i$, $y_i = a_i \cdot M + \varepsilon_i$) différentes.

Si le destinataire de la paire (a, y) est un adversaire ne connaissant pas la clé secrète M mais connaissant la paire (x, C(x)), composée de l'élément de message en clair et de l'élément de message codé, il a accès à la matrice M paramétrée par le vecteur aléatoire a, le tout bruité par le vecteur de bruit $\varepsilon$, autrement dit à $a \cdot M + \varepsilon$. En conséquence, pour casser la sécurité du procédé de chiffrement de l'invention, l'adversaire doit être capable de résoudre le problème LPN.

Dans un mode de réalisation particulier, le vecteur de bruit est généré à l'aide d'une source de bruit paramétrée de façon à ce que la probabilité pour le poids de Hamming du vecteur de bruit $\varepsilon$ d'être supérieur à la capacité de correction soit inférieure à un seuil prédéfini. Dans ce cas, le vecteur de bruit vérifie la condition pour être naturellement éliminé lors du décodage dans la plupart des cas et on accepte que pour quelques rares cas ce ne soit pas le cas.

Il peut être prévu une étape de test pour vérifier si le poids de Hamming du vecteur de bruit généré est inférieur ou égal à la capacité de correction et, si le test est négatif, un nouveau vecteur de bruit est généré. Dans ce cas, on vérifie systématiquement que le vecteur de bruit vérifie la condition pour être éliminé lors du décodage. Si tel n'est pas le cas, un nouveau vecteur de bruit est généré.

Avantageusement, t représentant la capacité de correction du code correcteur d'erreurs, $\eta$ la probabilité pour un bit du vecteur de bruit $\varepsilon$ de valoir 1 et n la longueur code correcteur d'erreurs, lesdits paramètres t, $\eta$ et n sont adaptés pour vérifier la condition $t > \eta \cdot n$. Ainsi, on garantit avec une grande probabilité, de façon très simple, que le décodage permettra de récupérer l'élément de message en clair.

La matrice M représentant la clé secrète peut être une matrice de Toeplitz. L'utilisation d'une matrice de Toeplitz permet de réduire la capacité de stockage nécessaire car il suffit de stocker les coefficients des première ligne et première colonne de la matrice pour en déduire l'intégralité des coefficients.

L'invention concerne aussi un procédé de déchiffrement d'un élément de message chiffré ayant été déterminé par application à un élément de message en clair du procédé de chiffrement qui vient d'être défini, lequel utilise une clé secrète pouvant être représentée sous la forme d'une matrice de dimension (k, n) avec k>1 et n>1. Une paire composée de l'élément de message chiffré et d'un vecteur aléatoire de dimension k utilisé pour chiffrer ledit élément de message étant fournie, le procédé de déchiffrement comprend

- une phase de calcul comprenant une étape de calcul d'un produit du vecteur aléatoire reçu et de la matrice et une étape d'ajout d'un résultat dudit produit à l'élément de message chiffré reçu, puis

- une phase de décodage lors de laquelle on opère un décodage d'un résultat de la phase de calcul, à l'aide du code correcteur d'erreurs utilisé lors du chiffrement, afin d'obtenir l'élément de message en clair.

L'invention sera mieux comprise à l'aide de la description suivante d'un mode de réalisation particulier du procédé de chiffrement et du procédé de déchiffrement de l'invention, ainsi que des entités de chiffrement et de déchiffrement correspondantes en référence aux dessins annexés sur lesquels :

- la figure 1 représente un organigramme des différentes étapes du procédé de chiffrement selon le mode de réalisation particulier décrit;
- la figure 2 représente un organigramme de différentes étapes mises en œuvre lors du déchiffrement d'un message chiffré à l'aide du procédé de la figure 1;
- la figure 3 représente un schéma bloc fonctionnel d'une forme de réalisation particulière d'une entité de chiffrement adaptée pour mettre en œuvre le procédé de la figure 1; et
- la figure 4 représente un schéma bloc fonctionnel d'une forme de réalisation particulière d'une entité de déchiffrement adaptée pour mettre en œuvre le procédé de la figure 2.

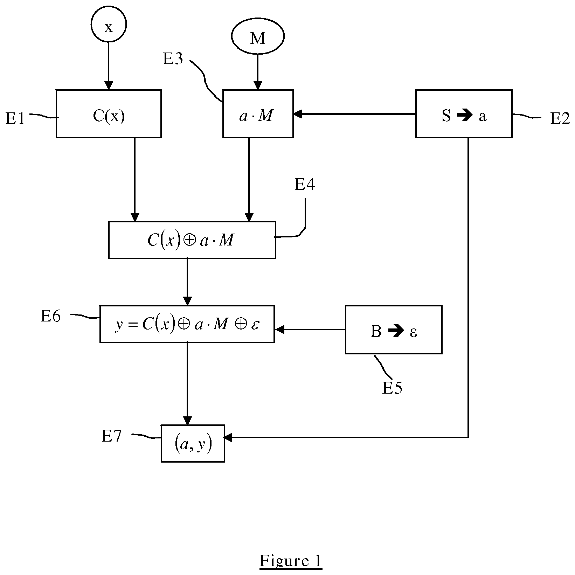

Sur la figure 1, on a représenté les différentes étapes d'un mode de réalisation particulier du procédé de chiffrement de l'invention.

Le procédé de chiffrement de la figure 1 est dit symétrique du fait qu'il utilise une clé secrète partagée par deux entités, l'une de chiffrement et l'autre de déchiffrement, respectivement référencées 1 et 2. L'entité de chiffrement 1 est apte à mettre en œuvre le procédé de chiffrement, alors que l'entité de déchiffrement 2 est apte à mettre en œuvre un procédé de déchiffrement, ou de restitution, du message en clair à partir du message chiffré fourni par l'entité de chiffrement 1. La clé secrète peut être représentée sous la forme d'une matrice M à k lignes et n colonnes, avec $1 \leq k$ et $1 \leq n$.

L'entité de chiffrement 1 et l'entité de déchiffrement 2 sont ici respectivement intégrées dans un équipement de communication émetteur et dans un équipement de communication récepteur, non représentés, aptes à communiquer entre eux ici par voie radio. L'équipement émetteur peut être une étiquette RFID et l'équipement récepteur un lecteur associé.

Le procédé de chiffrement de la figure 1 est également dit probabiliste du fait qu'il utilise un aléa pour calculer un message chiffré à partir d'un message en clair.

En référence à la figure 1, on va maintenant décrire le chiffrement d'un message en clair par l'entité de chiffrement 1. Le message en clair, noté x, est représenté par un vecteur binaire à R bits.

Le procédé de chiffrement de l'invention, selon le mode de réalisation particulier représenté sur la figure 1, comprend une étape E1 d'encodage du message x à l'aide d'un code correcteur d'erreurs.

Un code correcteur d'erreurs est une technique de codage bien connue de l'homme du métier, basée sur la redondance. Elle a usuellement pour vocation de corriger des erreurs de transmission d'un message à travers un canal de communication peu fiable. Des informations du message transmis à travers ce canal risquent en effet d'être altérées. Le code correcteur d'erreurs a pour rôle d'ajouter des informations redondantes dans le message avant sa transmission. Ces informations redondantes permettent de corriger les informations du message tel que reçu, qui ont été altérées lors de la transmission.

En l'espèce, le code correcteur d'erreurs est un code linéaire en blocs, noté C. Ce code correcteur d'erreurs C est de longueur n, de dimension r et de capacité de correction t. Autrement dit, le code correcteur C est une fonction de l'espace binaire de dimension r $\{0,1\}^r$ dans l'espace binaire de dimension n $\{0,1\}^n$. Cette fonction est adaptée pour transformer un message de r bits en un mot de code à n bits, avec n>r, par ajout de bits de redondance. En outre, le code C est adapté pour garantir que, si un nombre d'erreurs inférieur à la capacité de correction t est ajouté au mot de code, le décodage permet de restituer le message d'origine.

Dans l'exemple particulier décrit ici, on suppose que le nombre de bits R du message x est égal à la dimension r du code correcteur.

L'étape E1 d'encodage du message x fournit donc un mot de code représenté par un vecteur à n bits noté C(x).

Le procédé comprend une étape E2 de génération d'un aléa a. Dans l'exemple particulier de la présente description, l'aléa a est un vecteur binaire à k bits produit par une source pseudo-aléatoire de bits S.

L'étape E2 est suivie par une étape E3 de calcul du produit entre le vecteur aléatoire a, sous forme de vecteur ligne, et la matrice M représentant la clé secrète. Le résultat du produit $a \cdot M$ est représenté par un vecteur à n bits.

Une fois des étapes E1 et E3 réalisées, le procédé met en œuvre une étape de calcul E4 lors de laquelle le résultat du produit $a \cdot M$ est ajouté au mot de code C(x). Autrement dit l'étape E4 réalise l'opération $C(x) \oplus a \cdot M$. Le rôle de cette étape E4 est de chiffrer le mot de code C(x).

Le procédé comprend également une étape E5 de génération d'un vecteur de bruit binaire $\varepsilon$ à n bits à partir d'une source de bruit bernoullien B. Celle-ci est adaptée pour produire des bits indépendants valant 1 avec une probabilité $\eta$ et des bits indépendants valant 0 avec une probabilité 1- $\eta$, avec $\eta \in \left]0, \frac{1}{2}\right[$. En outre, la source de bruit B est adaptée pour que la probabilité $\delta$ pour le poids de Hamming du vecteur de bruit $\varepsilon$ d'être supérieur à la capacité de correction t du code correcteur soit très faible, inférieure à un seuil $\sum$ prédéfini. A titre d'exemple, ce seuil peut être égal à $10^{-3}$. Suivant le cadre d'utilisation, il pourrait être inférieur à cette valeur. Par définition, le poids de Hamming d'un vecteur binaire est le nombre de bits différents de 0, autrement dit valant 1, de ce vecteur. Ainsi, la plupart des vecteurs de bruit $\varepsilon$ générés par la source B, le poids de Hamming du vecteur $\varepsilon$, noté Hwt($\varepsilon$), est inférieur ou égal à la capacité de correction t du code correcteur. Dans l'exemple particulier décrit ici, pour satisfaire la condition relative à la probabilité $\delta$, les paramètres t, $\eta$ et n vérifient la relation suivante : $t > \eta * n$.

Une fois les étapes E4 et E5 réalisées, le procédé met en œuvre une étape de calcul E6, dans laquelle le vecteur de bruit $\varepsilon$ est ajouté au résultat de l'opération E4 $C(x) \oplus a \cdot M$. Autrement dit, l'étape E6 réalise l'opération suivante : $C(x) \oplus a \cdot M \oplus \varepsilon$. Le résultat de cette opération E6 est un vecteur à n bits, noté y, correspondant au message chiffré. Celui-ci est en définitive le mot de code C(x), c'est-à-dire le message x encodé, chiffré et bruité.

Enfin, le procédé comprend une étape E7 d'envoi de la paire (a, y), c'est-à-dire (a,C(x)⊕a·M⊕ε), à partir de l'équipement de communication émetteur vers l'équipement de communication récepteur.

La paire (a, y) circule à travers un canal de communication ici radio jusqu'à sa réception par l'équipement récepteur, lors d'une étape E8, représentée sur la figure 1. Pour rappel, l'équipement récepteur intègre une entité de déchiffrement apte à déchiffrer le message chiffré y reçu afin de retrouver le message en clair x.

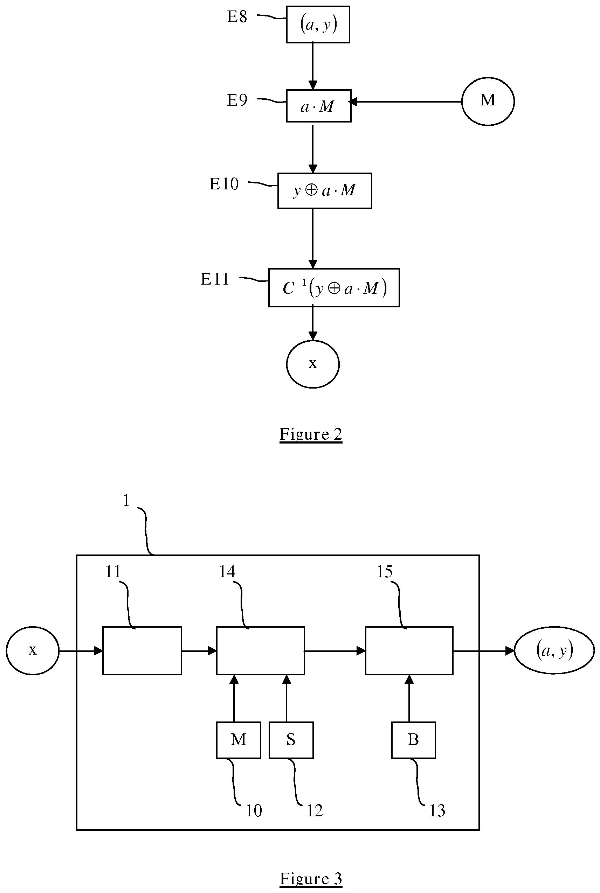

Sur la figure 2, on a représenté les différentes étapes du procédé de restitution, ou de déchiffrement, pour retrouver le message x à partir de la paire (a, y), mises en œuvre par l'entité de déchiffrement 2.

Pour rappel, l'entité de déchiffrement 2 a la connaissance de la clé secrète représentée par la matrice M.

Le procédé de restitution comprend d'abord une phase de calcul comprenant deux étapes de calcul E9 et E10.

Lors de la première étape de calcul E9, le vecteur aléatoire a est extrait de la paire (a, y) reçu et le produit $a \cdot M$ est calculé, a étant représenté sous la forme d'un vecteur ligne.

Lors de l'étape de calcul E10, le vecteur à n bits résultant du produit $a \cdot M$ est ajouté au vecteur y reçu, autrement dit l'opération de calcul $y \oplus a \cdot M$ est réalisée. En binaire, cette opération correspond à soustraire le résultat du produit $a \cdot M$ du vecteur y reçu.

On notera que y étant égal au mot de code chiffré et bruité, à savoir $C(x) \oplus a \cdot M \oplus \varepsilon$, le résultat de l'étape de calcul E10 correspond au mot de code uniquement bruité, à savoir $C(x) \oplus \varepsilon$.

Le procédé comprend ensuite une phase de décodage E11, lors de laquelle le résultat de l'étape E10 est décodé à l'aide du code correcteur d'erreurs utilisé lors du chiffrement. Le poids de Hamming du vecteur de bruit $\varepsilon$ étant inférieur ou égal à la capacité de correction t du code correcteur d'erreurs, le décodage fournit directement le message en clair x.

A titre d'exemples illustratifs mais non limitatifs, nous allons maintenant décrire quelques exemples de réalisation du procédé de chiffrement avec des paramètres concrets.

On rappelle ici que la sécurité du système de chiffrement de l'invention dépend de la difficulté de résolution du problème LPN. Or, cette difficulté repose sur les paramètres k et $\eta$, correspondant au nombre bits du vecteur aléatoire a et à la probabilité pour un bit de ce vecteur aléatoire a de valoir 1 respectivement. Il convient donc de choisir des valeurs convenables pour ces paramètres, permettant de garantir une bonne sécurité du système. Deux exemples de valeurs convenables pour ces paramètres k et $\eta$ sont les suivants :

- $k = 512, \eta = 0.125$
- $k = 768, \eta = 0.05$

On notera que si le message en clair x est de taille r bits, la taille totale du message chiffré transmis, correspondant à la paire $(a,y)$, est de $(n+k)$ bits. En effet, le vecteur aléatoire a comprend k bits et le chiffré y n bits. Le chiffrement s'accompagne donc d'une certaine expansion du message. On note $\sigma = \dfrac{(n+k)}{r}$ le facteur d'expansion, r représentant la taille du texte en clair chiffré (message ou bloc de message). Afin de limiter cette expansion, il convient, à k fixé, de choisir une valeur de r la plus grande possible et une valeur de n la plus faible possible. On rappelle en outre que les paramètres t, $\eta$ et n doivent vérifier la condition suivante : $t > \eta^* n$ afin de garantir un déchiffrement correct du message dans la plupart des cas.

On note $[n,r,d]$ un triplet de paramètres d'un code correcteur d'erreurs. Ces paramètres n, r et d correspondent respectivement à la longueur, la dimension et la distance minimale du code. La distance minimale d du code est fonction de la capacité de correction t, par la relation suivante : $t = \dfrac{d-1}{2}$.

On va maintenant donner quatre exemples de réalisation avec des paramètres concrets pour l'encodage et le chiffrement proprement dit :

- pour les paramètres $k = 512, \eta = 0.125$, on peut utiliser

  ○ un code linéaire paramétré par le triplet [80, 27, 21] capable de corriger 10 erreurs, le paramètre d'expansion $\sigma$ valant alors 21;
  ○ un code linéaire paramétré par le triplet [160, 42, 42] capable de corriger 20 erreurs, le paramètre d'expansion $\sigma$ valant alors 16.

- pour les paramètres $k = 768, \eta = 0.05$, on peut utiliser

  ○ un code linéaire paramétré par le triplet [80, 53, 9] capable de corriger 4 erreurs, le paramètre d'expansion $\sigma$ valant alors 16;
  ○ un code linéaire paramétré par le triplet [160, 99, 17] capable de corriger 8 erreurs, le paramètre d'expansion $\sigma$ valant alors 8,8.

Pour optimiser le facteur d'expansion $\sigma$, il est donc souhaitable d'utiliser une taille k grande pour le vecteur aléatoire, une probabilité $\eta$ pour chaque bit de ce vecteur aléatoire de valoir 1 faible et un code de grande longueur n et de grande dimension r.

On peut cependant également diminuer le facteur d'expansion $\sigma$ en augmentant la taille de la matrice M. En effet, en prenant une matrice à k lignes et N*n colonnes, avec N entier strictement supérieur à 2, on peut chiffrer N blocs de r bits en même temps, avec le même vecteur aléatoire de k bits. Le facteur d'expansion n'est alors que

$$\sigma = \frac{N*n+k}{N*r}.$$

Dans l'exemple qui vient d'être décrit, le nombre R de bits du message en clair est égal à la dimension r du code correcteur. Bien entendu, le nombre R de bits du message en clair x pourrait être inférieur ou bien supérieur à la dimension r du code correcteur.

Si R est supérieur à r, le message x est découpé en blocs, ou éléments de message, de r bits, avec éventuellement un "padding", c'est-à-dire un remplissage du dernier bloc par des bits valant 0, sans valeur d'information, pour les bits suivant le $R^{ième}$ et dernier bit du message x. Dans ce cas, les étapes E1 à E7 sont réitérées pour chacun des blocs de r bits et on obtient autant de paires $(a_i, y_i)$ composées d'un vecteur aléatoire $a_i$ et d'un chiffré $y_i$ qu'il y a de blocs de message à r bits.

Si R est inférieur à r, on réalise également un "padding" pour obtenir un élément de message x' à r bits, dont les R premiers bits sont les bits du message x et les bits suivant ce $R^{ième}$ bit sont des bits de remplissage valant 0, sans valeur d'information.

A la place d'un code correcteur linéaire en blocs, on pourrait utiliser d'autres types de codes correcteurs d'erreurs, notamment des codes convolutifs.

On soulignera que la nature du code utilisé n'a pas d'impact sur la sécurité du chiffrement mais seulement sur son efficacité vis-à-vis de la correction.

On soulignera que le procédé de chiffrement de l'invention bénéficie de preuves de sécurité basée sur l'hypothèse de difficulté de résolution du problème LPN, bien connu dans le domaine de la cryptographie. En outre, il ne requiert pas de ressources de calcul et de mémoire importantes. En effet, les opérations de calcul réalisées ne sont que des additions ou des multiplications simples. Le procédé de chiffrement de l'invention est donc à la fois sûr et peu coûteux en ressources de calcul et de mémoire.

Dans la description qui précède, la source de bruit B est adaptée pour générer des vecteurs de bruit $\varepsilon$ ayant un poids de Hamming Hwt($\varepsilon$) inférieur ou égal à la capacité de correction t avec une forte probabilité, égale à 1-$\delta$. Grâce à cela, on garantit que, dans une proportion satisfaisante de cas, le décodage permettra de retrouver le message en clair x à partir de message encodé et bruité, $C(x) \oplus \varepsilon$. Dans un autre mode de réalisation, il est prévu lors du processus de chiffrement une étape de test mise en œuvre après l'étape E5 de génération d'un vecteur de bruit $\varepsilon$. Lors de cette étape de test, il est vérifié si le poids de Hamming Hwt($\varepsilon$) du vecteur de bruit $\varepsilon$ est bien inférieur ou égal à la capacité de correction t du code correcteur d'erreurs. Si tel est le cas, le vecteur de bruit $\varepsilon$ est fourni à l'étape E6 d'ajout de bruit. Sinon, l'étape E5 de génération d'un vecteur de bruit est réitérée afin de générer un nouveau vecteur de bruit qui est lui-même vérifié par l'étape de test.

On va maintenant décrire l'entité de chiffrement 1, en référence à la figure 3.

L'entité de chiffrement 1 comprend une mémoire 10 de stockage d'une clé secrète sous la forme d'une matrice M, un module d'encodage 11, une source S de bits pseudo-aléatoires 12, une source B de bruit bernoullien 13, un module de chiffrement 14 et un module 15 d'ajout d'un bruit. La mémoire 10 et la source S 12 sont reliés au module de chiffrement 14. Celui-ci est connecté en entrée au module d'encodage 11 et en sortie au module d'ajout de bruit 15, lequel est relié à la source de bruit B 13. En fonctionnement, un message en clair est fourni en entrée du module d'encodage 11 et une ou plusieurs paires composées chacune d'un aléa et d'un chiffré correspondant (message ou bloc de message chiffré) est produit en sortie du module 15.

La mémoire 10 est destinée à stocker la clé secrète partagée par l'entité de chiffrement 1 et l'entité de déchiffrement 2. Cette clé est représentée sous la forme d'une matrice M à k lignes et n colonnes. En l'espèce, il s'agit d'une matrice de Toeplitz. Par définition, il s'agit d'une matrice dont les coefficients sur une diagonale descendant de gauche à droite sont les mêmes. Elle a donc la forme suivante :

$$M = \begin{bmatrix} m_{0,0} & m_{1,0} & m_{2,0} & \cdots & \cdots & m_{n-1,0} \\ m_{0,1} & m_{0,0} & m_{1,0} & \ddots & & \vdots \\ m_{0,2} & m_{0,1} & m_{0,0} & \ddots & \ddots & \vdots \\ \vdots & \ddots & \ddots & \ddots & \ddots & m_{2,0} \\ \vdots & & \ddots & \ddots & \ddots & m_{1,0} \\ m_{0,k-1} & \cdots & \cdots & m_{0,2} & m_{0,1} & m_{0,0} \end{bmatrix}.$$

On voit sur la représentation ci-dessus d'une matrice de Toeplitz que l'ensemble des coefficients d'une telle matrice peuvent se déduire des seuls coefficients de la première ligne et de la première colonne de la matrice. Aussi, il suffit de stocker les seuls coefficients de la première ligne et de la première colonne de la matrice pour disposer de l'ensemble des coefficients de la matrice.

La mémoire 10 ne stocke donc ici que les coefficients de la première ligne et les coefficients de la première colonne de la matrice. L'utilisation d'une matrice de Toeplitz permet de limiter la capacité de stockage nécessaire pour stocker les coefficients de la matrice M.

Le module d'encodage 11 est agencé pour encoder un message x en un mot de code C(x) à l'aide d'un code correcteur d'erreurs linéaire. Comme précédemment explicité, ce code correcteur d'erreurs C est de longueur n, de dimension r et de capacité de correction t. Il s'agit d'une fonction adaptée pour transformer un code de r bits en un mot de code à n bits, avec n>r, par ajout de bits de redondance. Le code à r bits peut être le message x à coder si le nombre de bits R du message est égal à r , ou un bloc de message $x_i$ de r bits du message x, qui est découpé en blocs si le nombre R de bits du message x est supérieur à r, ou bien encore, le message x complété par des bits de remplissage valant 0, si le nombre R de bits du message x est inférieur à r. Le module d'encodage 11 est donc également agencé pour comparer la taille R du message x avec la dimension r du code, et :

- si R>r, découper le message x en blocs de r bits, en complétant le cas échéant le dernier bloc par des bits de remplissage valant 0 par "padding", dans le cas où R n'est pas un multiple de r,
- si R<r, compléter le message x par des bits de remplissage valant 0 pour obtenir un message x' de r bits.

La source S de bits pseudo-aléatoire est agencée pour générer un vecteur aléatoire a à k bits pour chaque opération de chiffrement.

Le module de chiffrement 14 est adapté pour

- calculer le produit du vecteur aléatoire a, pris sous la forme d'un vecteur ligne, avec la matrice M représentant la clé secrète, soit le produit $a \cdot M$,
- ajouter au message x encodé C(x) (ou au bloc de message encodé $x_i$, ou bien au message x' complété encodé) le résultat du produit $a \cdot M$.

Le module de chiffrement 14 fournit donc en sortie le mot de code C(x) chiffré à l'aide de la clé secrète et d'un aléa, soit $C(x) \oplus a \cdot M$.

Le module 15 d'ajout d'un bruit comprend une source de bruit bernoullien B, référencée 13. Cette source de bruit 13 a pour rôle de générer un vecteur de bruit ε à n bits à chaque opération de chiffrement. Comme précédemment explicité, cette source 13 est adaptée pour produire des bits indépendants valant 1 avec une probabilité η avec $\eta \in \left]0, \frac{1}{2}\right[$. En outre, la probabilité δ pour le poids de Hamming du vecteur de bruit ε d'être supérieur à la capacité de correction t du code correcteur est très faible, inférieure à un seuil S prédéfini. Dans l'exemple particulier décrit ici, les paramètres t, η et n vérifient la condition suivante : $t > \eta * n$ de façon à garantir que le décodage permet de restituer le message en clair avec une forte probabilité. Le module 15 a pour rôle de générer un vecteur de bruit ε et de l'ajouter au mot de code chiffré sortant du module de chiffrement, autrement de calculer $(C(x) \oplus a \cdot M) \oplus \varepsilon$.

Dans l'exemple décrit ici, le module d'encodage 11, la source S de bits pseudo-aléatoires 12, la source B de bruit bernoullien 13, le module de chiffrement 14 et le module 15 d'ajout d'un bruit sont des moyens logiciels. L'invention concerne donc aussi un programme d'ordinateur comportant des instructions pour la mise en œuvre du procédé de chiffrement précédemment décrit mis en œuvre par l'entité de chiffrement 1, lorsque ce programme est exécuté par un processeur de l'entité de chiffrement 1, non représenté. Ce programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

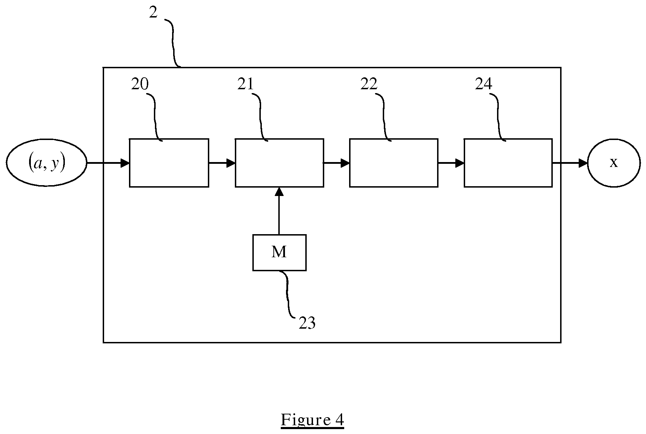

En référence à la figure 4, on va maintenant décrire l'entité de déchiffrement 2. Elle comprend un module de réception 20, un module de calcul 21, un module de décodage 22 et une mémoire 23.

La mémoire 23 stocke la clé secrète partagée entre l'entité de chiffrement 1 et l'entité de déchiffrement 2. Plus précisément, la mémoire 23 stocke les coefficients de la matrice M. En l'espèce, M étant une matrice de Toeplitz, seuls les coefficients de la première ligne et les coefficients de la première colonne de la matrice M sont stockés en pratique.

Le module de réception 20 a pour rôle de recevoir des paires (a,y), comportant chacune un vecteur aléatoire a et un message chiffré y correspondant, obtenu par chiffrement à l'aide de la matrice M à partir d'un message en clair x et d'un aléa a.

Le module de calcul 21 a pour rôle, en cas de réception d'une paire (a,y), de

- calculer le produit $a \cdot M$ en utilisant le vecteur a reçu et la matrice M stockée dans la mémoire 23,

- puis réaliser l'opération $y \oplus a \cdot M$ à l'aide du message chiffré y reçu et du résultat du produit $a \cdot M$ calculé, afin de retirer le vecteur $a \cdot M$ du message chiffré reçu y.

On notera que, y étant égal à $C(x) \oplus a \cdot M \oplus \varepsilon$, le résultat du calcul de $y \oplus a \cdot M$ correspond à $C(x) \oplus \varepsilon$. Le calcul réalisé par le module 21 correspond à retirer le vecteur $a \cdot M$ du vecteur $y = C(x) \oplus a \cdot M \oplus \varepsilon$.

Le module de décodage 22 est adapté pour décoder le résultat du calcul réalisé par le module 21, à savoir $y \oplus a \cdot M$ correspondant à $C(x) \oplus \varepsilon$, à l'aide du code correcteur d'erreurs C. Le vecteur de bruit $\varepsilon$ ayant un poids de Hamming inférieur ou égal à la capacité de correction t du code correcteur, l'opération de décodage fournit directement le message en clair x.

En outre, l'entité de chiffrement 2 comprend un module de reconstitution de message 24 adapté pour, dans le cas où le message x a été décomposé en blocs de r bits $x_1, x_2, ...$ afin d'être chiffré, pour recomposer le message x à partir des blocs en clair $x_1, x_2, ...$ fournis par le module de décodage 22.

Le module de calcul 21 est connecté, en entrée, au module de réception 20 et à la mémoire 23, et, en sortie, au module de décodage 22. Le module de restitution 24 est connecté à la sortie du module de décodage 22.

Dans l'exemple décrit ici, le module de calcul 21, le module de décodage 22 et le module de reconstitution 24 sont des moyens logiciels. L'invention concerne donc aussi un programme d'ordinateur comportant des instructions pour la mise en œuvre du procédé de déchiffrement précédemment décrit, mis en œuvre par l'entité de déchiffrement 2, lorsque ce programme est exécuté par un processeur de l'entité de déchiffrement, non représenté. Ce programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

L'invention trouve notamment une application dans le domaine de la cryptographie à bas coût, par exemple dans les étiquettes RFID.

**Revendications**

1. Procédé de chiffrement symétrique probabiliste d'un élément de message en clair (x) à l'aide d'une clé secrète pouvant être représentée sous la forme d'une matrice (M) de dimension (k, n), comprenant les étapes suivantes :

   - une étape d'encodage (E1) de l'élément de message en clair (x) en un mot de code (C(x)) à l'aide d'un code correcteur d'erreurs (C) ayant une capacité de correction donnée (t);
   - une étape de chiffrement (E4) du mot de code (C(x)), lors de laquelle le résultat d'un produit de la matrice secrète (M) et d'un vecteur aléatoire (a) de dimension k est ajouté au mot de code (C(x)),
   - une étape de calcul (E6) lors de laquelle un vecteur de bruit ($\varepsilon$) est ajouté au mot de code chiffré ($C(x) \oplus a \cdot M$) afin d'obtenir un élément de message chiffré ($y = C(x) \oplus a \cdot M \oplus \varepsilon$) couplé au vecteur aléatoire (a), ledit procédé étant **caractérisé en ce qu'**il comprend
   - une étape de test pour vérifier si le poids de Hamming du vecteur de bruit ($\varepsilon$) généré est inférieur ou égal à la capacité de correction (t) et, si le test est négatif, un nouveau vecteur de bruit est généré.

2. Procédé selon la revendication 1, dans lequel le vecteur de bruit ($\varepsilon$) est généré à l'aide d'une source de bruit (B, 13) paramétrée de façon à ce que la probabilité pour le poids de Hamming du vecteur de bruit ($\varepsilon$) d'être supérieur à la capacité de correction (t) soit inférieure à un seuil prédéfini ($\Sigma$).

3. Procédé selon la revendication 1, dans lequel, t représentant la capacité de correction du code correcteur d'erreurs, $\eta$ la probabilité pour un bit du vecteur de bruit ($\varepsilon$) de valoir 1 et n la longueur du code correcteur d'erreurs, lesdits paramètres t, $\eta$ et n sont adaptés pour vérifier la condition $t > \eta \cdot n$.

4. Procédé selon la revendication 1, dans lequel ladite matrice (M) est une matrice de Toeplitz.

5. Procédé de déchiffrement d'un élément de message chiffré (y) ayant été déterminé par application à un élément de message en clair (x) du procédé de chiffrement selon la revendication 1 utilisant une clé secrète pouvant être représentée sous la forme d'une matrice (M) de dimension (k, n), procédé de déchiffrement dans lequel, une paire (($a, y$)) composée de l'élément de message chiffré (y) et d'un vecteur aléatoire (a) de dimension k utilisé pour chiffrer ledit élément de message (x) étant fournie, il est prévu

   - une phase de calcul comprenant une étape (E9) de calcul d'un produit du vecteur aléatoire reçu (a) et de la matrice (M) et une étape (E10) d'ajout d'un résultat dudit produit à l'élément de message chiffré (y) reçu, puis

- une phase de décodage (E11) lors de laquelle on opère un décodage d'un résultat de la phase de calcul, à l'aide du code correcteur d'erreurs utilisé lors du chiffrement, afin d'obtenir l'élément de message en clair (x).

6. Entité de chiffrement symétrique probabiliste à l'aide d'une clé secrète pouvant être représentée sous la forme d'une matrice (M) de dimension (k, n), comprenant

   - des moyens (11) d'encodage, agencés pour encoder l'élément de message en clair (x) en un mot de code (C(x)) à l'aide d'un code correcteur d'erreurs ayant une capacité de correction donnée (t),
   - des moyens (14) de chiffrement du mot de code (C(x)) agencés pour ajouter au mot de code (C(x)) le résultat d'un produit de ladite matrice (M) et d'un vecteur aléatoire (a) de dimension k,
   - des moyens (15) de calcul adaptés pour ajouter un vecteur de bruit ($\varepsilon$) au mot de code chiffré ($C(x) \oplus a \cdot M$) afin d'obtenir un élément de message chiffré ($y = C(x) \oplus a \cdot M \oplus \varepsilon$) couplé au vecteur aléatoire (a), **caractérisée en ce que** ladite entité contient
   - des moyens de test adaptés pour vérifier si le poids de Hamming du vecteur de bruit ($\varepsilon$) généré est inférieur ou égal à la capacité de correction (t) et, si le test est négatif, pour générer un nouveau vecteur de bruit.

7. Equipement de communication intégrant l'entité de chiffrement définie dans la revendication 6.

8. Système de chiffrement et de déchiffrement comprenant une entité de chiffrement symétrique probabiliste (1) et une entité de déchiffrement correspondante (2), les deux entités partageant une clé secrète pouvant être représentée par une matrice (M) de dimension (k, n) et l'entité de chiffrement (1) étant destinée à fournir à l'entité de déchiffrement (2) une paire composée (($a,y$)) d'un élément de message chiffré (y) et d'un vecteur aléatoire (a) de dimension k utilisé pour déterminer ledit élément message chiffré (y), système dans lequel l'entité de chiffrement (1) est conforme à celle définie dans la revendication 6 et l'entité de déchiffrement (2) comprend des moyens de calcul (21) adaptés pour calculer un produit du vecteur aléatoire reçu (a) et ladite matrice (M) et pour ajouter le résultat dudit produit à l'élément de message chiffré reçu (y), et des moyens de décodage (22) agencés pour décoder le résultat des calculs effectués par les moyens de calcul (21), à l'aide d'un code correcteur d'erreurs utilisé pour la détermination de l'élément de message chiffré (y), afin d'obtenir un élément de message en clair (x).

9. Programme d'ordinateur comportant des instructions pour la mise en œuvre du procédé de chiffrement selon la revendication 1 lorsque ce programme est exécuté par un processeur.

10. Programme d'ordinateur comportant des instructions pour la mise en œuvre du procédé de déchiffrement selon la revendication 5 lorsque ce programme est exécuté par un processeur.

**Patentansprüche**

1. Verfahren zur probabilistischen symmetrischen Verschlüsselung eines Klartextelements (x) mithilfe eines geheimen Schlüssels, der in Form einer Matrix (M) der Dimension (k x n) dargestellt werden kann, umfassend die folgenden Schritte:

   - einen Schritt zur Codierung (E1) des Klartextelements (x) in ein Codewort (C(x)) mithilfe eines Fehlerkorrekturcodes (C) mit einer gegebenen Korrekturfähigkeit (t);
   - einen Schritt zur Verschlüsselung (E4) des Codeworts (C(x)), bei dem das Ergebnis eines Produkts der geheimen Matrix (M) und eines Zufallsvektors (a) der Dimension k zu dem Codewort (C(x)) hinzugefügt wird,
   - einen Berechnungsschritt (E6), bei dem ein Rauschvektor ($\varepsilon$) zu dem verschlüsselten Codewort ($C(x) \oplus a \cdot M$) hinzugefügt wird, um ein verschlüsseltes Textelement ($y = C(x) \oplus a \cdot M \oplus \varepsilon$) zu erhalten, das mit dem Zufallsvektor (a) gekoppelt ist, wobei das Verfahren **dadurch gekennzeichnet ist, dass** es Folgendes umfasst:

     - einen Testschritt zum Überprüfen, ob das Hamming-Gewicht des generierten Rauschvektors ($\varepsilon$) kleiner oder gleich der Korrekturfähigkeit (t) ist, und wenn der Test negativ ist, wird ein neuer Rauschvektor generiert.

2. Verfahren nach Anspruch 1, wobei der Rauschvektor ($\varepsilon$) mithilfe einer Rauschquelle (B, 13) generiert wird, die derart parametrisiert ist, dass die Wahrscheinlichkeit, dass das Hamming-Gewicht des Rauschvektors ($\varepsilon$) größer ist als die Korrekturfähigkeit (t), kleiner ist als eine vordefinierte Schwelle ($\Sigma$).

3. Verfahren nach Anspruch 1, wobei, wenn t die Korrekturfähigkeit des Fehlerkorrekturcodes ist, $\eta$ die Wahrschein-

lichkeit dafür ist, dass ein Bit des Rauschvektors ($\varepsilon$) den Wert 1 aufweist, und n die Länge des Fehlerkorrekturcodes ist, die Parameter t, $\eta$ und n dazu angepasst sind, die Bedingung $t > \eta \cdot n$ zu erfüllen.

4. Verfahren nach Anspruch 1, wobei die Matrix (M) eine Toeplitz-Matrix ist.

5. Verfahren zur Entschlüsselung eines verschlüsselten Textelements (y), das durch Anwendung des Verfahrens zur Verschlüsselung nach Anspruch 1 auf ein Klartextelement (x) unter Verwendung eines geheimen Schlüssels bestimmt wurde, der in Form einer Matrix (M) der Dimension (k x n) dargestellt werden kann, wobei, unter Bereitstellung eines Paars ((a, y)), das sich aus dem verschlüsselten Textelement (y) und einem Zufallsvektor (a) der Dimension k zusammensetzt, der dazu verwendet wird, das Textelement (x) zu verschlüsseln, in dem Verfahren zur Entschlüsselung Folgendes vorgesehen ist:

- eine Berechnungsphase, umfassend einen Schritt (E9) zur Berechnung eines Produkts des empfangenen Zufallsvektors (a) und der Matrix (M) und einen Schritt (E10) zur Hinzufügung eines Ergebnisses des Produkts zu dem empfangenen verschlüsselten Textelement (y), dann
- eine Decodierungsphase (E11), bei der mithilfe des Fehlerkorrekturcodes, der bei der Verschlüsselung verwendet wird, eine Decodierung eines Ergebnisses der Berechnungsphase durchgeführt wird, um das Klartextelement (x) zu erhalten.

6. Einheit zur probabilistischen symmetrischen Verschlüsselung mithilfe eines geheimen Schlüssels, der in Form einer Matrix (M) der Dimension (k x n) dargestellt werden kann, umfassend:

- Mittel (11) zur Codierung, die dazu eingerichtet sind, das Klartextelement (x) in ein Codewort (C(x)) mithilfe eines Fehlerkorrekturcodes mit einer gegebenen Korrekturfähigkeit (t) zu codieren ;
- Mittel (14) zur Verschlüsselung des Codeworts (C(x)), die dazu eingerichtet sind, das Ergebnis eines Produkts der Matrix (M) und eines Zufallsvektors (a) der Dimension k zu dem Codewort (C(x)) hinzuzufügen,
- Mittel (15) zur Berechnung, die dazu angepasst sind, einen Rauschvektor ($\varepsilon$) zu dem verschlüsselten Codewort ($C(x) \oplus a \cdot M$) hinzuzufügen, um ein verschlüsseltes Textelement ($y = C(x) \oplus a \cdot M \oplus \varepsilon$) zu erhalten, das mit dem Zufallsvektor (a) gekoppelt ist, **dadurch gekennzeichnet, dass** die Einheit Folgendes umfasst:
- Testmittel, die dazu angepasst sind, zu überprüfen, ob das Hamming-Gewicht des generierten Rauschvektors ($\varepsilon$) kleiner oder gleich der Korrekturfähigkeit (t) ist, und wenn der Test negativ ist, einen neuen Rauschvektor zu generieren.

7. Kommunikationseinrichtung, welche die in Anspruch 6 definierte Einheit zur Verschlüsselung integriert.

8. System zur Verschlüsselung und Entschlüsselung, umfassend eine Einheit zur probabilistischen symmetrischen Verschlüsselung nach Anspruch 6 (1) und eine entsprechende Einheit zur Entschlüsselung (2), wobei die beiden Einheiten einen geheimen Schlüssel teilen, der als Matrix (M) der Dimension (k x n) dargestellt werden kann, und die Einheit zur Verschlüsselung (1) dazu bestimmt ist, der Einheit zur Entschlüsselung (2) ein Paar ((a, y)) bereitzustellen, das sich aus einem verschlüsselten Textelement (y) und einem Zufallsvektor (a) der Dimension k zusammensetzt, der dazu verwendet wird, das verschlüsselte Textelement (y) zu bestimmen, wobei in dem System die Einheit zur Verschlüsselung (1) derjenigen entspricht, die in Anspruch 6 definiert ist, und die Einheit zur Entschlüsselung (2) Berechnungsmittel (21), die dazu angepasst sind, ein Produkt des empfangenen Zufallsvektors (a) und der Matrix (M) zu berechnen und das Ergebnis des Produkts zu dem empfangenen verschlüsselten Textelement (y) hinzuzufügen, und Decodierungsmittel (22) umfasst, die dazu eingerichtet sind, das Ergebnis der von den Berechnungsmitteln (21) vorgenommenen Berechnungen mithilfe eines Fehlerkorrekturcodes zu decodieren, der zur Bestimmung des verschlüsselten Textelements (y) verwendet wird, um ein Klartextelement (x) zu erhalten.

9. Computerprogramm, umfassend Anweisungen zur Durchführung des Verfahrens zur Verschlüsselung nach Anspruch 1, wenn das Programm von einem Prozessor ausgeführt wird.

10. Computerprogramm, umfassend Anweisungen zur Durchführung des Verfahrens zur Verschlüsselung nach Anspruch 5, wenn das Programm von einem Prozessor ausgeführt wird.

## Claims

1. Method of probabilistic symmetric encryption of a plaintext message element (x) with the aid of a secret key that can be represented in the form of a matrix (M) of dimension (k, n), comprising the following steps:

- a step (E1) of encoding the plaintext message element (x) as a code word (C(x)) with the aid of an error correcting code (C) having a given correction capacity (t);
- a step (E4) of encrypting the code word (C(x)), during which the result of a product of the secret matrix (M) and of a random vector (a) of dimension k is added to the code word (C(x)),
- a computation step (E6) during which a noise vector ($\varepsilon$) is added to the encrypted code word ( $C(x){\oplus}a{\cdot}M$ ) so as to obtain an encrypted message element ($y=C(x){\oplus}a{\cdot}M{\oplus}\varepsilon$) coupled to the random vector (a),

said method being **characterized in that** it comprises a test step for verifying whether the Hamming weight of the noise vector ($\varepsilon$) generated is less than or equal to the correction capacity (t) and, if the test is negative, a new noise vector is generated.

2. Method according to Claim 1, in which the noise vector ($\varepsilon$) is generated with the aid of a noise source (B, 13) parametrized in such a way that the probability of the Hamming weight of the noise vector ($\varepsilon$) being greater than the correction capacity (t) is less than a predefined threshold ($\Sigma$).

3. Method according to Claim 1, in which, t representing the correction capacity of the error correcting code, $\eta$ the probability of a bit of the noise vector ($\varepsilon$) being equal to 1 and n the length of the error correcting code, said parameters t, $\eta$ and n are adapted to satisfy the condition $t > \eta{\cdot}n$.

4. Method according to Claim 1, in which said matrix (M) is a Toeplitz matrix.

5. Method for decrypting an encrypted message element (y) having been determined by application to a plaintext message element (x) of the encryption method according to claim 1 using a secret key that can be represented in the form of a matrix (M) of dimension (k, n), in which method of decryption, a pair ((a,y)) composed of the encrypted message element (y) and of a random vector (a) of dimension k used to encrypt said message element (x) being provided, there is envisaged

- a computation phase comprising a step (E9) of computing a product of the random vector received (a) and of the matrix (M) and a step (E10) of adding a result of said product to the encrypted message element (y) received, and then
- a decoding phase (E11) during which a decoding of a result of the computation phase is operated with the aid of the error correcting code used during the encryption, so as to obtain the plaintext message element (x).

6. Entity for probabilistic symmetric encryption with the aid of a secret key that can be represented in the form of a matrix (M) of dimension (k, n), comprising

- means (11) for encoding, designed to encode the plaintext message element (x) as a code word (C(x)) with the aid of an error correcting code having a given correction capacity (t),
- means (14) for encrypting the code word (C(x)) designed to add to the code word (C(x)) the result of a product of said matrix (M) and of a random vector (a) of dimension k,
- computation means (15) adapted for adding a noise vector ($\varepsilon$) to the encrypted code word ( $C(x){\oplus}a{\cdot}M$ ) so as to obtain an encrypted message element ($y=C(x){\oplus}a{\cdot}M{\oplus}\varepsilon$) coupled to the random vector (a),

**characterized in that** said entity contains
- test means adapted for verifying whether the Hamming weight of the noise vector ($\varepsilon$) generated is less than or equal to the correction capacity (t) and, if the test is negative, for generating *a* new noise vector.

7. Item of communication equipment integrating the encryption entity defined in Claim 6.

8. Encryption and decryption system comprising a probabilistic symmetric encryption entity (1) according to Claim 6 and a corresponding decryption entity (2), the two entities sharing a secret key that can be represented by a matrix (M) of dimension (k, n) and the encryption entity (1) being intended to provide the decryption entity (2) with a pair composed ((a,y)) of an encrypted message element (y) and of *a* random vector (a) of dimension k used to determine said encrypted message element (y), in which system the encryption entity (1) complies with that defined in Claim 6 and the decryption entity (2) comprises computation means (21) adapted for computing a product of the random vector received (a) and said matrix (M) and for adding the result of said product to the encrypted message element received (y), and decoding means (22) designed to decode the result of the computations performed by the computation means (21), with the aid of an error correcting code used for the determination of the encrypted message element (y), so as to obtain a plaintext message element (x).

9. Computer program comprising instructions for the implementation of the encryption method according to Claim 1 when this program is executed by a processor.

10. Computer program comprising instructions for the implementation of the decryption method according to Claim 5 when this program is executed by a processor.

Figure 1

E8 —⌐ $(a, y)$

E9 —⌐ $a \cdot M$ ◄— M

E10 —⌐ $y \oplus a \cdot M$

E11 —⌐ $C^{-1}(y \oplus a \cdot M)$

x

Figure 2

1

11    14    15

x → [ ] → [ ] → [ ] → $(a, y)$

M    S    B

10    12    13

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003223579 A

**Littérature non-brevet citée dans la description**

- **JEAN-PHILIPPE AUMASSON ; MATTHIEU FINIASZ ; WILLI MEIER.** *XP019065040 TCHo : A Hardware-Oriented Trapdoor Cipher*
- **RAO T R N ; KIL-HYUN NAM.** *XP000100912 PRIVATE-KEY ALGEBRAIC-CODE ENCRYPTIONS*
- **ELWYN BERLEKAMO R ; ROBERT J MCELIECE ; HENK C A VAN TILBORG.** *XP055558121 On the Inherent Intractability of Certain Codiig Problems*
- **AVRIM BLUM ; MERRICK FURST ; MICHAEL KEARNS ; RICHARD J LIPTON.** *Cryptographie Primitives Based on Hard Learning Problems*